Europäisches Patentamt

(19) European Patent Office

Office européen des brevets

(11) Publication number: **0 108 784**
**B1**

(12) **EUROPEAN PATENT SPECIFICATION**

(45) Date of publication of patent specification: 03.02.88

(51) Int. Cl.⁴: **G 06 K 1/12**, B 41 J 1/10

(21) Application number: 83901641.7

(22) Date of filing: 09.05.83

(86) International application number:
PCT/SE83/00189

(87) International publication number:
WO 83/04118 24.11.83 Gazette 83/27

(54) **PRINTING DEVICE.**

(30) Priority: 11.05.82 SE 8202957

(43) Date of publication of application:
23.05.84 Bulletin 84/21

(45) Publication of the grant of the patent:
03.02.88 Bulletin 88/05

(84) Designated Contracting States:
AT BE CH DE FR GB LI LU NL

(56) References cited:
EP-A-0 026 831
DE-A-1 524 395
DE-A-2 715 462
DE-A-2 716 843
DE-C-2 012 739
US-A-3 242 855
US-A-3 687 256
US-A-3 730 084
US-A-3 820 643
US-A-3 828 667
US-A-3 918 567
US-A-3 952 153
US-A-3 989 929
US-A-4 018 152

(73) Proprietor: SIMIC, Borislav
Fjäderharvsgatan 81
S-424 66 Angered (SE)

(72) Inventor: SIMIC, Borislav
Fjäderharvsgatan 81
S-424 66 Angered (SE)

(74) Representative: Ryrlén, Evert et al
ALFONS HEDBERGS PATENTBYRÄ AB
Aschebergsgatan 35
S-411 33 Göteborg (SE)

Courier Press, Leamington Spa, England.

## Description

This invention relates to a printing device of the kind defined in the preamble of claim 1.

For identification and evaluation of information concerning commercial articles mainly labels or decorating prints have previously been used. However, the so-called bar code has also recently gained ground. The code comprises combinations of dark and light bars, so-called modules, which form together an optically readable symbol. The symbols are read mechanically using e.g. pen readers, fix readers or laser scanners.

When using the new bar code, which is also called EAN (European Article Numbering), special problems exist in marking of so-called weight items. These articles which can consist of e.g. meat, fish, cheese or fruit, comprise packages with i.a. individual prices. The equipment for these weight articles can include a balance, a clear text indicator, an adapting unit which can be included in a computer, as well as a bar code printer.

US—A—3 828 667 discloses a bar code printer which includes a plurality of thin lamellae in the form of type wheels having parallel main planes and bound to each other in a package by means of coupling means. Said type wheels are rotatable in the main planes. This known printer further comprises means for allowing a separating effect of said type wheels during the adjusting step and a clamping effect during the printing operation. By means of a roller a relative reciprocal movement of the type wheels and the object to be printed is also enabled.

It is now the object of the invention to provide a printing device making it possible to change the symbols of the bar code in a quick and simple manner as desired, e.g. in dependence of varying prices and weights. The construction of the printing device must then also be such that it will be possible to obtain a distinct print also on materials, e.g. corrugated cardboard, to which it is normally difficult to apply a print. In order that the bar code symbol might be read correctly the printing quality must always be within the tolerances of the EAN standards. The conventionally used cliches usually operate with inks that can flow out or leave easily. The lines of the bar code will then often be diffuse, which in its turn may lead to the bar code being wrongly interpreted or quite unreadable.

By using the printing device of the invention the above disadvantages associated with known constructions are eliminated. This is achieved by the bar code printer defined in claim 1.

The bar code is usually found in different dimensions. As the bars are to be very thin it is suitable to use metal lamellae. However, when using broader bars it is also possible to use plastic lamellae. The printing pattern of the package of lamellae represents the symbol to be transferred to the object. The lamellae end edges being in a moved forward or nonactivated position represents dark bars while the lamellae end edges moved back by the activation of actuating means represents light bars. Under certain circumstances the opposite condition can however also be realized. In the previous case the marking of the intended article is carried out with advantage e.g. by using a high quality ink ribbon arranged between the article and the printing device.

The invention is described more closely below in the form of preferred illustrative examples with reference to the enclosed drawing.

Fig. 1 shows schematically the units that can be included in equipment for providing a bar code on objects.

Fig. 2 is a perspective view of the essential parts of a printing device made according to the principles of the invention in connection with printing.

Fig. 3 shows a perspective view of two of the lamellae in close proximity to each other in the construction illustrated in Fig. 2.

Fig. 4 shows a top plan view of a modified embodiment of a lamella and guide axles cooperating with the lamella.

In the various drawing figures like parts are indicated with the same reference numerals.

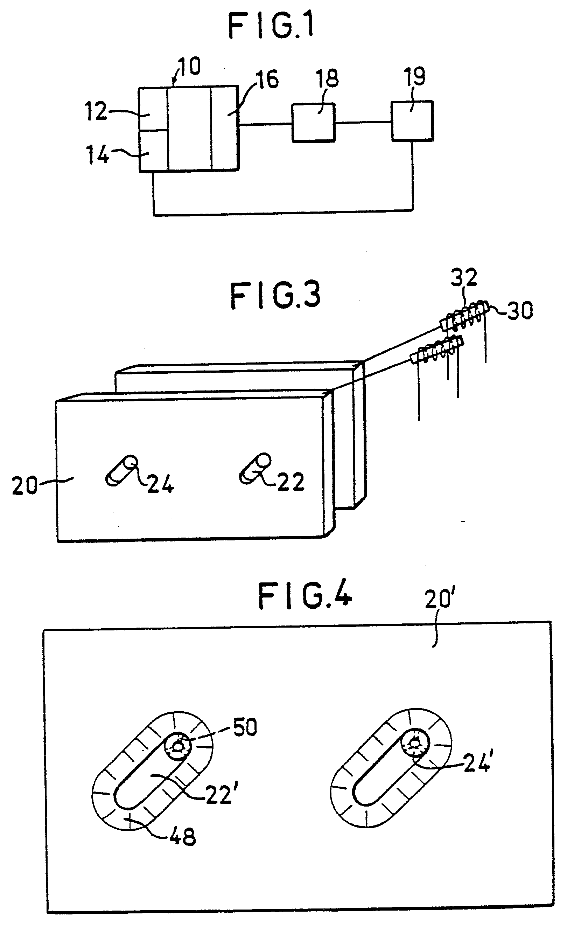

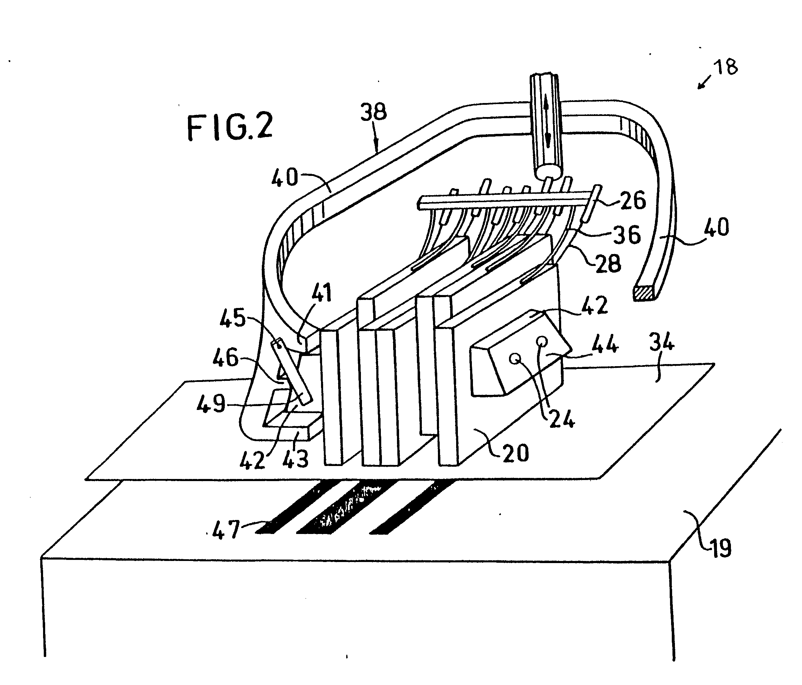

The summary grouping according to Fig. 1 shows as examples the main parts of equipment in which the new printing device can be included. The reference numeral 10 relates to a computer comprising a writing and a weighing unit 12 and 14, respectively. It is possible to program the computer with the help of these units so that it can give information on each occasion in clear text about the actual price relative to measured weight. The computer 10 also includes an adapting unit 16 in which the information about the text en clair of the computer is converted into bar code statements. These are sent in the form of current pulses to the very printing device 18, a figure in the code normally corresponding to transfer and/ or not transfer of totally seven current pulses. By means of the printing device 18 the intended object 19 can thereafter be marked with the intended, machine readable symbol.

The printing device 18 shown in Fig. 2 comprises a plurality of thin rectangular steel lamellae which are similar to each other and arranged close to each other with parallel main planes. Elongated holes 22 are made uniformly in the lamellae 20; see Fig. 3. As all the lamellae are placed with their end edges in the same plane two passing holes 22 consequently extend through the package of lamellae. In the embodiment shown the holes are placed so that the extension of the longest diameter of the hole opening forms an angle of approximately 45° to the relative lamellae edges. Guide axes 24 extend through the holes 22. The two holes 22 and the guide axes 24, respectively, are identically the same, and each guide axle is made so that the lamellae 20 can be displaced separately when guided on the axles. The displacement is achieved by the influence of the actuating means 26, which consist of an electromagnet associated with each lamella 20, said electromagnet being guided via control pulses from the adapting unit 16 of the computer 10. As is apparent from the drawing a metal wire element 28 is attached to the upper portion of each lamella 20. Each wire element 28 projects at one end of the relative lamella and supports the magnet element 30 associated with the electromagnet 26, said element being movable in a corresponding current coil 32. When a current pulse is transmitted from the adapting unit 16 to the current coil 32 the magnet element 30 is attracted with the result that the corresponding lamella 20 is moved backwards upwards from a state nonactivated in the starting position. The printing surface of the lamella 20 will then be displaced relative to the total marking surface of the lamella package (directed downwards in Fig. 2), which means that the lamella in a following printing operation will contribute with a light bar in the pattern surface of the lamella package. On the other hand, lamellae not receiving any current pulse will transmit dark bars in marking, an ink ribbon 34 e.g. being used.

In order to achieve a rapid return of actuated lamellae to the starting position at a desired point of time prestressing means in the form of plate springs 36 arranged to counteract the displacement of the lamellae from the starting position are utilized. The plate springs shown in the drawing — one for each lamella — can of course, if desired, be replaced with tension springs, which then act at the opposite side of the lamella package.

As operating means to fix the lamellae reciprocally in a set position and to impart a reciprocating movement to the lamellae package a gripping claw 38 is utilized, which in the illustrative example shown includes a fork-shaped element with two similar fork portions 40 arranged to act on both sides of the lamellae package. The gripping claw brings about compression of the lamellae 20, and for this object there are special pressing elements 42 with wedge-shaped pressing surfaces 44 on the outside of the outer lamellae of the lamella package. These pressing surfaces are intended to be brought into engagement with or be disengaged from the gripping claw 38, respectively, when this is moved parallelly to the main plane of the lamellae. In order to make possible a good contact between the pressing elements 42 and the corresponding fork portions 30 the latter are provided with jaws 46 at their relative contact surfaces The guide axes 24 are guided in the pressing elements 42 which in their turn are guided in the projection portions 41, 43 of the fork portions. Lateral locking is ensured by means of locking elements 49 rotatable at the pins 45 from a locking position.

When printing a bar code the electromagnets 26 are now first pulse guided via the computer 10, resulting in that the lamellae 20 are moved to a desired position for adjusting the intended pattern code. After this the fork portion 40 are moved downwards, which means that the claws 46 are made to engage the pressing elements 42 so that the lamellae are compressed and fixed relative to each other. At the continued downward movement of the fork portions 40 the whole lamellae package is brought along and moved towards the ink ribbon 34 to press and print the relative code 47 against the intended article 19. After printing the fork portions 40 as well as the lamellae package is returned from the object. At a returning movement the pressure of the fork portions against the press elements 42 is released and the lamellae 20 are unloaded.

The gripping claw 38 described above can of course be modified in several different manners. Thus, it can also include an arm with end portions movable relative to each other which are displaceable towards the lamellae package from its opposite sides in order to press the lamellae together. Guiding of the gripping claw can take place in many different ways, e.g. by means of hydraulics, pneumatics or electrically.

The plane surfaces of the lamellae 20 facing each other should be very fine to obtain a desired high EAN-tolerance according to standards. However, the lamellae must not "adhere" to each other but it should be easy to move them rapidly to their intended positions. This is facilitated if the pressing elements 42 described above consist of permanent magnets. When the gripping claw 38 does not exert any pressure against the lamellae package the lamellae 30 will repel each other due to the action of magnets. Instead of permanent magnets it is of course also possible to use electromagnets to obtain the same repelling effect.

As already mentioned above different materials can be used for the lamellae 20. When making very narrow bars steel lamellae are utilized, as plastic and the like does not offer enough stiffness in this case. When marking piece goods and the like having big dimensions the bars should, however, be easily readable also at a certain distance, and therefore the lamellae must be broader. In this case it is suitable, for economical reasons, to utilize plastic lamellae. When using plastic it is of course not possible to use permanent or electromagnets for separation of the lamellae, when these are not activated by the gripping claw. Instead it is however possible to design the guide axes as pipes 24' fed with compressed air, which is illustrated in Fig. 4. The holes 22' through each separate lamella 20' should then be bevelled 48 or recessed at one lamella side so that adjacent lamellae define between themselves air pockets, which communicate with the interior of the guide tubes 24' via pipe holes 50. This is especially apparent from Fig. 4.

When utilizing the construction described above it is also possible to build the whole lamella package in a printing roller, where the lamella end edges intended for printing only form part of the surface of the printing roller. The other parts of the periphery of the printing roller can then be utilized as a usual stamp with figures and letters.

Modifications of the printing device described above can of course be made within the scope of the following claims.

## Claims

1. A bar code printer (18) including a plurality of thin lamellae (20) being similar to each other and arranged close to each other with parallel main planes and bound to each other by means of coupling means (22, 24), said lamellae being movable in the main planes during an adjusting step, means for promoting a separating effect of the lamellae during the adjusting step and operating means (38, 40, 42) arranged to mutually fix the lamellae in the set position by pressing them together and to provide a relative movement of the lamellae towards an article (19) to be printed, characterized in that the lamellae (20) are rectangular with printing edges on one side, said coupling means includes parallel guide axes (24) extending through two uniformly located elongated holes (22) in the package of lamellae, and further in that said lamellae are in operative engagement with actuating means (26, 28) on the side opposite to the side with the printing edges and said actuating means allow selected ones of said lamellae to be separately displaced with respect to said guide axes (24).

2. The printing device of claim 1, characterized in that the lamellae consist of a magnetic material disposed so that they repel each other perpendicularly to the main planes.

3. The printing device of claim 1, characterized in that the lamellae (20) consist of a magnetizable material and that magnets (44) are so arranged at opposite sides of the lamellae package that the lamellae repel each other perpendicularly to the main planes.

4. The printing device of claim 1, characterized in that the lamellae (20') consist of a non-magnetizable material, e.g. plastic, that prevents reciprocal adhesion thereof.

5. The printing device of claim 1, characterized in that air pockets are defined between adjacent lamellae (20') in which pockets a positive pressure prevails so that the lamellae are forced to separate themselves from each other.

## Patentansprüche

1. Strichcodedrucker (18) mit einer Mehrzahl von dünnen Lamellen (20), die einander gleich, nahe beieinander mit einander parallelen Hauptebenen angeordnet und miteinander durch Verbindungsmittel (22, 24) verbunden sind, wobei diese Lamellen während eines Einstellschrittes in den Hauptebenen bewegbar sind, Mitteln zum Erreichen einer Abstosswirkung zwischen den Lamellen während des Einstellschrittes und Betätigungsmitteln (38, 40, 42), die dazu ausgebildet sind, die Lamellen durch Aufeinanderpressen in der Einstellage gegenseitig festzuhalten und eine relative Bewegung der Lamellen zu einem zu bedruckenden Gegenstand (19) hin vorzusehen, dadurch gekennzeichnet, dass die Lamellen (20) rechteckig sind und auf einer Seite Druckkanten aufweisen, die Verbindungsmittel einander parallele Führungsachsen (24) umfassen, die sich durch zwei im Lamellenpaket gleichmässig verteilte längliche Löcher (22) erstrecken, und dass ausserdem diese Lamellen auf der Seite, die der Seite mit den Druckkanten gegenüberliegt, mit Betätigungsmitteln (26, 28) im Wirkeingriff stehen und diese Betätigungsmittel gewissen dieser Lamellen ermöglichen, in Bezug auf diese Führungsachsen (24) einzeln bewegt zu werden.

2. Druckervorrichtung nach Anspruch 1, dadurch gekennzeichnet, dass die Lamellen aus magnetischem Material bestehen, das so angeordnet ist, dass sie einander rechtwinklig zu den Hauptebenen abstossen.

3. Druckervorrichtung nach Anspruch 1, dadurch gekennzeichnet, dass die Lamellen (20) aus magnetisierbarem Material bestehen und auf gegenüberliegenden Seiten des Lamellenpaketes Magnete (44) so angeordnet sind, dass die Lamellen einander rechtwinklig zu den Hauptebenen abstossen.

4. Druckervorrichtung nach Anspruch 1, dadurch gekennzeichnet, dass die Lamellen (20') aus nichtmagnetischem Material wie beispielsweise Kunststoff bestehen, das deren gegenseitiges Aneinanderhaften verhindert.

5. Druckervorrichtung nach Anspruch 1, dadurch gekennzeichnet, dass zwischen benachbarten Lamellen (20') Lufttaschen definiert sind, in denen ein positiver Druck herrscht, so dass die Lamellen gezwungen werden, sich voneinander zu trennen.

## Revendications

1. Imprimante de code à batonnets (18) comprenant une pluralité de lamelles minces (20) semblables les unes aux autres, disposées proches les unes des autres en ayant leurs plans principaux parallèles entre eux, et liées les unes aux autres par des moyens de couplage (22, 24), ces lamelles pouvant être deplacées dans les plans principaux pendant une étape d'adjustement, des moyens d'obtention d'un effet de separation des lamelles durant l'étape d'adjustement et des moyens d'actionnement (38, 40, 42) disposés de façon à fixer mutuellement les lamelles dans la position ajustée en les pressant ensemble et à prévoir un mouvement relatif des lamelles vers un article (19) à imprimer, caractérisée en ce que les lamelles (20) sont rectangulaires avec des arêtes d'impression disposées sur un côté, les moyens de couplage comportent des axes de guidage (24) parallèles entre eux et qui s'étendent à travers deux trous allongés (22) uniformement placés dans le paquet de lamelles, et en ce qu'en outre ces lamelles sont fonctionnellement en prise avec des moyens d'actionnement (26, 28) disposés sur le côté opposé au côté portant les arêtes d'impression et ces moyens d'actionnement permettent à certaines de ces lamelles d'être deplacées séparément par rapport à ces axes de guidage (24).

2. Dispositif d'imprimante selon la revendication 1, caractérisé en ce que les lamelles sont constituées de matériau magnétique disposé de telle façon qu'elles se repoussent les unes les autres perpendiculairement à leurs plans principaux.

3. Dispositif d'imprimante selon la revendication 1, caractérisé en ce que les lamelles (20) sont constituees de matériau magnétisable et que des aimants (44) sont disposés de telle façon en des côtés opposés de la pile de lamelles que les lamelles se repoussent les unes les autres perpendiculairement à leurs plans principaux.

4. Dispositif d'imprimante selon la revendication 1, caractérisé en ce que les lamelles (20') sont constituées de matériau non magétisable, par exemple de matière plastique, qui empêche qu'elles n'adhèrent les unes aux autres.

5. Dispositif d'imprimante selon la revendication 1, caractérisé en ce que des poches d'air sont définies entre lamelles adjacentes (20') et que dans ces poches règne une pression positive de façon que les lamelles sont contraintes de se séparer les unes des autres.

# FIG.1

# FIG.3

# FIG.4

FIG.2